# EUROPEAN PATENT SPECIFICATION

(11) **EP 2 559 091 B1**
(45) Date of publication and mention of the grant of the patent: **14.05.2014**
(21) Application number: 11724446.7
(22) Date of filing: 13.04.2011
(51) Int. Cl.: H01M 8/10, H01M 4/88

(54) **MEMBRANE ELECTRODE ASSEMBLY, METHOD OF MANUFACTURE THEREOF, AND FUEL CELL**
MEMBRANELEKTRODENANORDNUNG, HERSTELLUNGSVERFAHREN DAFÜR UND BRENNSTOFFZELLE
ENSEMBLE ÉLECTRODE À MEMBRANE, PROCÉDÉ DE FABRICATION DE CE DERNIER ET CELLULE ÉLECTROCHIMIQUE

(30) Priority: 13.04.2010 JP 2010091874
(43) Date of publication of application: 20.02.2013
(73) Proprietor: TOYOTA JIDOSHA KABUSHIKI KAISHA, Toyota-shi, Aichi-ken, 471-8571 (JP)
(72) Inventor: HASEGAWA, Shigeki, Toyota-shi, Aichi-ken, 471-8571 (JP); SHINOZAKI, Yoshihiro, Toyota-shi, Aichi-ken, 471-8571 (JP); IMANISHI, Masahiro, Toyota-shi, Aichi-ken, 471-8571 (JP); SANO, Seiji, Toyota-shi, Aichi-ken, 471-8571 (JP)
(74) Representative: Winter, Brandl, Fürniss, Hübner, Röss, Kaiser, Polte - Partnerschaft
(86) International application number: PCT/IB2011/000816
(87) International publication number: WO 2011/128761

(56) References cited:
- EP-A2- 1 553 052
- WO-A1-2010/117339
- WO-A2-2004/109837
- WO-A2-2006/099593
- WO-A2-2008/054510
- US-A1- 2007 166 603

## Description

### BACKGROUND OF THE INVENTION

### 1. Field of the Invention

The invention relates to a Membrane Electrode Assembly (MEA) and a method of manufacture thereof, and also to a fuel cell. More particularly, the invention relates to a MEA and a fuel cell in which the electrode layers are made of Carbon NanoTubes (CNTs).

### 2. Description of Related Art

Japanese Patent Application Publication No. 2002-298861 (JP-A 2002-298861) discloses a MEA having a current collector layer composed of electrically conductive fibers, carbon nanofibers formed substantially perpendicular to the current collector layer, a catalyst supported on the surface of the carbon nanofibers, and a proton conductor which is formed contiguously with the catalyst at the surfaces of the carbon nanofibers. The carbon nanofibers are formed perpendicular to the current collector layer composed of conductive fibers. Moreover, the end portion of each carbon nanofiber extends along the circumferentce of the cross section of the conductive fiber. This enables a good adhesion to be achieved between the carbon nanofibers and the conductive fibers, resulting in good electron conductivity at the interfaces therebetween. As a result, an increase in fuel cell output can be expected.

Electrochemical reactions in the fuel cell arise at the three-phase interface between the catalyst, a polymer electrolyte (ionomer) and a reactant gas. Hence, were it possible to more efficiently supply a reactant gas to the three-phase interface, an even further increase in the cell performance, including an increased output, should be achievable.

However, in JP-A 2002-298861, the surface of the carbon nanofibers is covered with an ionomer layer. Also, the ionomer generally includes product water from electrochemical reactions and moisture due to humidification. On examining how the reactant gas which is supplied reaches the three-phase interface, it appears here that the reactant gas reaches the three-phase interface while dissolving and diffusing in the water present within the ionomer. Hence, there is a possibility that the diffusivity of the reactant gas decreases in the ionomer layer, lowering the cell performance. Therefore, from the standpoint of dissolution and diffusion of the supplied reactant gas in the ionomer, there remains room for improvement with regard to increasing cell performance.

WO2006099593 discloses a membrane electrode assembly comprising a carbon nanotubes with catalyst disposed on an electrolyte membrane.

### SUMMARY OF THE INVENTION

The invention provides a MEA according to claim 1 which can more efficiently supply a reactant gas to the three-phase interface. The invention also provides a method of manufacturing such a MEA according to claim 10, and a fuel cell in which such a MEA is used.

A first aspect of the invention relates to a MEA having a polymer electrolyte membrane; a CNT which is disposed so as to be in contact with the polymer electrolyte membrane, and which, in a lengthwise direction thereof, is open at a first end and closed at a second end; a catalyst disposed on an outer surface of the CNT; and a proton conductor disposed at the outer surface of the CNT so as to be in contact with the catalyst. The closed end of the CNT is disposed on an electrolyte membrane side of the CNT, and on the outer surface of the CNT, a plurality of communicating pores which communicate with an interior space of the CNT are formed.

Because the closed end of the CNT is disposed on the electrolyte membrane side of the CNT, the open end of the CNT may be disposed on a separator or gas diffusion layer side in which have been formed flow channels through which a reactant gas is allowed to flow. A plurality of communicating pores which communicate with the interior space of the CNT are formed on the outer surface of the CNT. The interior space of the CNT is a tubular hollow space. Hence, the reactant gas supplied through the gas flow channels is able to flow through the open end of the CNT, the tubular hollow space, and the plurality of communicating pores in this order. By disposing the closed end of the CNT on the electrolyte membrane side, the movement of water from the electrolyte membrane side to the tubular hollow space can be prevented, thus enabling the suppression of factors which hinder the diffusion of the reactant gas in the tubular hollow space. As a result of the above, the reactant gas is able to rapidly reach the catalyst disposed on the outer surface of the CNT, making it possible to efficiently supply the reactant gas to the three-phase interface.

The outer surface of the CNT may be subjected to hydrophilizing treatment.

The outer surface of the CNT may have an amorphous layer structure.

In the above arrangement, because the outer surface of the carbon nanofiber has been subjected to hydrophilizing treatment, product water and the like can be prevented from flowing into the tubular hollow space from the plurality of communicating pores. Moreover, even if condensation has formed in the tubular hollow space, moisture can be rapidly discharged to the exterior through these communicating pores.

The CNT may be formed substantially perpendicular to the polymer electrolyte membrane.

In this arrangement, because the CNTs are formed so as to be substantially vertical, spaces that allows the reactant gas to readily diffuse can be secured between mutually adjoining CNTs, making it possible to shorten the gas transport path between CNTs. Moreover, because the length of the CNTs can be made very short, the gas transport path between the hollow spaces can be shortened. As a result, the diffusivity of the reactant gas can be increased in the CNT layer.

The CNT may be used in a cathodic electrode.

Generally, oxygen is supplied as the reactant gas to the cathode side electrode. A decrease in the diffusivity of this oxygen within the electrode influences in particular the output, which is a fuel cell characteristic. In this connection, when the CNT described above is used in a cathodic electrode, the diffusivity of oxygen at the cathode-side electrode can be maintained at a good level. Hence, it is possible to improve the fuel cell characteristics.

The plurality of communicating pores may be formed by heating the CNT in presence of oxygen.

Alternatively, the plurality of communicating pores may be formed by adding a metal salt to the CNT and heating.

Or the plurality of communicating pores may be formed by subjecting to microwave irradiation the CNT on which water or alcohol is deposited.

The above arrangements enable a plurality of communicating pores to be reliably formed in the outer surface of the CNT, thus making it possible to have the reactant gas reach the catalyst without being retained in the tubular hollow space.

A second aspect of the invention relates to a fuel cell having a polymer electrolyte membrane, a CNT which is disposed so as to be in contact with the polymer electrolyte membrane and which, in a lengthwise direction thereof, is open at a first end and closed at a second end, a catalyst disposed on an outer surface of the CNT, a proton conductor disposed at the outer surface of the CNT so as to be in contact with the catalyst, and a separator or a gas diffusion layer which is disposed so as to be in contact with the CNT, and on which a gas flow channel that allows a reactant gas to flow is formed. The closed end of the CNT is disposed on an electrolyte membrane side thereof, and the open end of the CNT communicates with the gas flow channel. In addition, the outer surface of the CNT has formed thereon a plurality of communicating pores which communicate with an interior space of the CNT.

This arrangement enables the open end of the CNT to communicate directly with gas flow channels in the separator or the gas diffusion layer, thereby making it possible to provide a fuel cell which is capable of efficiently supplying the reactant gas to the three-phase interface.

A third aspect of the invention relates to a method of manufacturing a MEA, which method includes: growing a CNT on a substrate; forming a plurality of communicating pores in a side surface of the CNT; supporting a catalyst on the CNT; coating an ionomer on the catalyst-supporting CNT; and transferring the ionomer-coated CNT from the substrate to a polymer electrolyte membrane.

### BRIEF DESCRIPTION OF THE DRAWINGS

The foregoing and further objects, features and advantages of the invention will become apparent from the following description of exemplary embodiments with reference to the accompanying drawings, wherein like numerals are used to represent like elements and wherein:
FIG. 1 is a schematic diagram showing the cross-sectional structure of a fuel cell 10;
FIG. 2 is an enlarged schematic diagram showing part of a cathode catalyst layer 16;
FIG. 3 is an enlarged schematic diagram of a cathode catalyst layer 30 according to the comparative example;
FIG. 4 is an enlarged schematic diagram of the dashed line-enclosed portion of FIG. 3;
FIG. 5 is a Scanning Electron Micrograph (SEM) of a cross-section of a cathode catalyst layer fabricated in an embodiment of the invention;
FIG. 6A is a Transmission Electron Micrograph (TEM) of the closed end of a CNT prior to transfer;
FIG. 6B is a TEM of the open end of a CNT following transfer;
FIG. 7 is a TEM showing the crystal structure and defect structure of a CNT; and
FIG. 8 is a graph showing the results of a performance test.

### DETAILED DESCRIPTION OF EMBODIMENTS

### Fuel Cell Construction

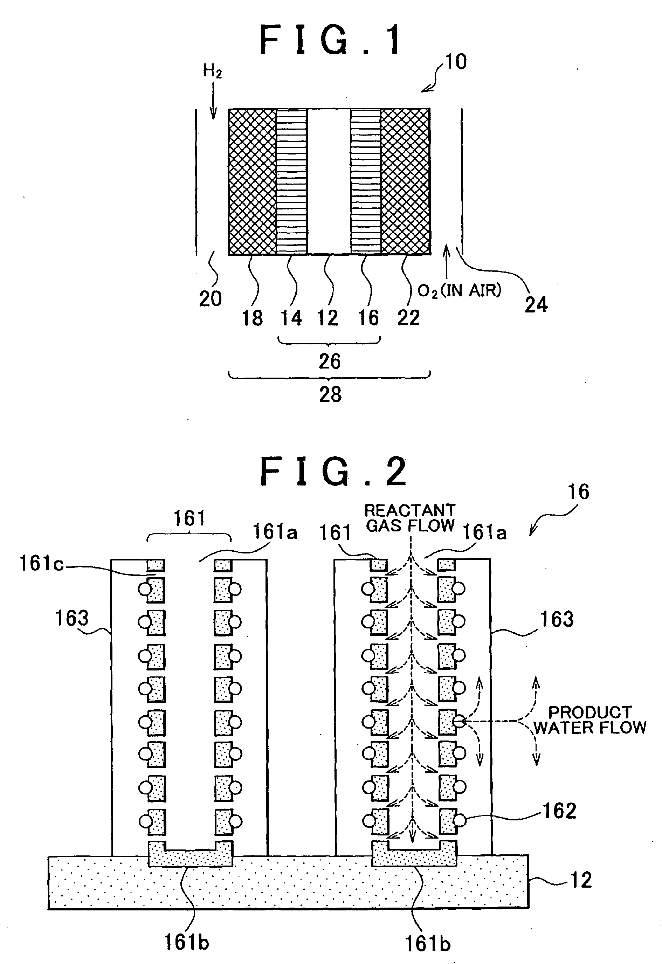

FIG. 1 is a schematic cross-sectional diagram showing the construction of a fuel cell 10 according to one embodiment of the invention. Referring to FIG. 1, a fuel cell 10 has a polymer electrolyte membrane 12 on opposite sides of which an anode catalyst layer 14 and a cathode catalyst layer 16 are respectively provided so as to sandwich the polymer electrolyte membrane 12. A gas diffusion layer 18 and a separator 20 are provided in this order outside of the anode catalyst layer 14. A gas diffusion layer 22 and a separator 24 are similarly provided in this order outside of the cathode catalyst layer 16. The polymer electrolyte membrane 12 and the pair of catalyst layers, namely the anode catalyst layer 14 and the cathode catalyst layer 16 on either side thereof, together make up a MEA 26.

The polymer electrolyte membrane 12 is a proton exchange membrane conducts protons from the anode catalyst layer 14 to the cathode catalyst layer 16. The polymer electrolyte membrane 12 is a hydrocarbon-based polymer electrolyte that has been formed into a membrane.

Examples of hydrocarbon-based polymer electrolytes include (i) hydrocarbon-based polymers in which the main chain is composed of an aliphatic hydrocarbon, (ii) polymers in which the main chain is composed of an aliphatic hydrocarbon and some or all of the hydrogen atoms on the main chain have been substituted with fluorine atoms, and (iii) polymers in which the main chain has aromatic rings. Either a polymer electrolyte having acidic groups or a polymer electrolyte having basic groups may be used as the polymer electrolyte. Of these, it is preferable to use polymer electrolytes having acidic groups because fuel cells with an excellent performance tend to be obtained. Examples of the acidic groups include sulfonic acid groups, sulfonamide groups, carboxyl groups, phosphonic acid groups, phosphoric acid groups and phenolic hydroxyl groups. Of these, sulfonic acid groups or phosphonic acid groups are preferred. Sulfonic acid groups are especially preferred.

Illustrative examples of such polymer electrolyte membranes 12 include NAFION® (DuPont), FLEMION® (Asahi Glass Co., Ltd), ACIPLEX® (Asahi Kasei Chemicals Co., Ltd) and GORE-SELECT® (Japan Gore-Tex Co., Ltd).

The anode catalyst layer 14 and the cathode catalyst layer 16 are layers which function substantially as electrode layers in a fuel cell. A catalyst supported on CNTs is used in both the anode catalyst layer 14 and the cathode catalyst layer 16.

The gas diffusion layers 18 and 22 are electrically conductive porous substrates whose purposes are to uniformly diffuse a precursor gas to the respective catalyst layers and to suppress drying of the MEA26. Illustrative examples of electrically conductive porous substrates include carbon-based porous materials such as carbon paper, carbon cloth and carbon felt.

The porous substrate may be formed of a single layer, or it may be formed of two layers by providing a porous layer having a small pore size on the side facing the catalyst layer. In addition, the porous substrate may also be provided with a water-repelling layer facing the catalyst layer. The water-repelling layer generally has a porous structure which includes an electrically conductive particulate material such as carbon particles or carbon fibers, and a water-repelling resin such as polytetrafluoroethylene. By providing such a water-repelling layer, the ability of the gas diffusion layers 18 and 22 to remove water can be increased while at the same time a suitable amount of moisture is retained within the anode catalyst layer 14, the cathode catalyst layer 16 and the polymer electrolyte membrane 12. In addition, electrical contact between the anode catalyst layer 14 and cathode catalyst layer 16 and the gas diffusion layers 18 and 22 can be improved. The gas diffusion layers 18 and 22, together with the MEA26, make up a membrane-electrode-gas-diffusion layer assembly (MEGA) 28.

The separators 20 and 24 are formed of materials having electron conductivity. Examples of such materials include carbon, resin molded carbon, titanium and stainless steel. These separators 20 and 24 typically have fuel flow channels formed on the gas diffusion layer 18 and 22 sides thereof, which flow channels allow the fuel gas to flow.

FIG. 1 shows only a single MEGA28 composed as described above, with a pair of separators 20 and 24 disposed on either side thereof. An actual fuel cell has a stacked construction in which a plurality of MEGA 28 are stacked with separators 20 and 24 therebetween.

FIG. 2 is an enlarged schematic diagram showing a portion of the cathode catalyst layer 16 in FIG 1. The cathode catalyst layer 16 includes electron conductive CNTs 161, each having a hollow space formed at the interior. The CNTs 161 are oriented substantially perpendicular to the polymer electrolyte membrane 12 by the subsequently described method of manufacture. Because the CNTs 161 are substantially perpendicularly oriented, spaces through which the reactant gas readily diffuses can be secured between mutually adjoining CNTs 161, enabling the diffusivity of the reactant gas to be increased. Moreover, because the CNTs 161 can be made very short in length, the gas transport path between these hollow spaces can be shortened. Therefore, the diffusivity of reactant gas can be increased even in the hollow space.

As used herein, "substantially perpendicular" refers to an angle between the polymer electrolyte membrane 12 and the lengthwise direction of the tube of 90°±10°. This encompasses cases where, owing to the conditions at the time of manufacture, for example, an angle of 90° is not always achieved. Within a range of 90°±10°, effects similar to those obtained when the CNTs are formed at 90° can be attained. CNTs which are substantially perpendicularly oriented include both CNTs having a shape in the lengthwise direction thereof which is linear as well as CNTs for which this shape is not linear. Hence, in CNTs for which the shape in the lengthwise direction of the tube is not linear, the direction of the straight line connecting the centers of both end faces of the CNT shall be regarded as the lengthwise direction of that nanotube.

A first end of the CNT 161 in the lengthwise direction thereof is formed as an open end 161 a, and a second end of the CNT 161 is formed as a closed end 161b. The open end 161a is disposed so as to be in contact with the gas diffusion layer 22 in FIG. 1. The closed end 161b is disposed so as to be in contact with the polymer electrolyte membrane 12. In addition, defects 161c are formed on the surfaces of the CNTs 161. The defects 161c are formed so as to communicate between the outer surfaces of the CNTs 161 and the hollow spaces therein.

Catalyst particles 162 are provided on the outer surfaces of the CNTs 161. Examples of the catalyst particles 162 include metals such as platinum, ruthenium, iridium, rhodium, palladium, osmium, tungsten, lead, iron, chromium, cobalt, nickel, manganese, vanadium, molybdenum, gallium and aluminum, and alloys thereof. Platinum or an alloy of platinum with another metal such as ruthenium is preferred. An ionomer 163 is provided so as to cover the catalyst particles 162 on the outer surfaces of the CNTs 161. The ionomer 163 provided on the outer surfaces of mutually adjoining CNTs 161 need not necessarily be in direct mutual contact. In other words, the ionomer 163 need not necessary fill the spaces between mutually adjoining CNTs 161. Examples of preferred ionomers 163 include materials similar to the polymer electrolytes mentioned in connection with the polymer electrolyte membrane 12.

Because the structure and orientation of the CNTs 161 are designed as described above, the reactant gas can be made to arrive at the catalyst particles 162 via two pathways. In the first, the reactant gas arrives after passing from the spaces formed between the mutually adjoining CNTs 161 and through the interior of the ionomer 163. In the second, as shown by the dashed lines in the diagram, the reactant gas arrives after passing through the open ends 161 a, the hollow space in the CNTs 161 and the defects 161c. In this way, the reactant gas can be made to arrive even closer to the catalyst particles 162 while in a gaseous state. In particular, the second pathway enables the reactant gas to arrive while retaining a high concentration state. Therefore, regardless of the operating state of the fuel cell 10, a good performance can be achieved. This fact is connected with the ability to also suppress a decline in cell performance as the amount of catalyst decreases. Hence, lower fuel cell 10 costs can also be achieved.

The undesirable entry of ionomer components and moisture into the hollow space is also conceivable. However, because the closed end 161b is provided on the polymer electrolyte membrane 12 side, no influx of ionomer component or moisture occurs from the polymer electrolyte membrane 12 side. Also, the ionomer 163 is formed on the outer surface of the CNTs 161; the ionomer 163 is not formed within the hollow space. The reason for this is as follows. In the manufacturing method which is subsequently described, the ionomer components are coated onto the outer surfaces of the CNTs 161. However, because the ionomer components are generally bulky polymers having large molecular weights and because the defects 161c are very small pores, the ionomer components are unable to flow into the hollow spaces. Moreover, because product water from the electrochemical reactions is discharged through this ionomer 163 in the manner indicated by the dashed lines in the diagram, it too does not flow into the hollow spaces. As a result, because the reactant gas flow channels in the hollow spaces are constantly secured, the reactant gas can be made to reach the vicinity of the catalyst particles 162 in a gaseous state.

To further promote moisture discharge, it is preferable for an amorphous layer (a hydrophilized layer.(hydrophilic layer)) to be formed on the outer surface of the CNTs 161. Also, it is preferable for a highly crystalline layer (water-repelling layer) to be formed on the inner surface of the CNTs 161. When the layer structure of the CNTs 161 has been formed as described above, moisture can be prevented from flowing into the hollow spaces during, for example, the subsequently described ionomer coating step. Moreover, even should condensation arise in the hollow spaces during operation of the fuel cell 10, moisture can be rapidly discharged.

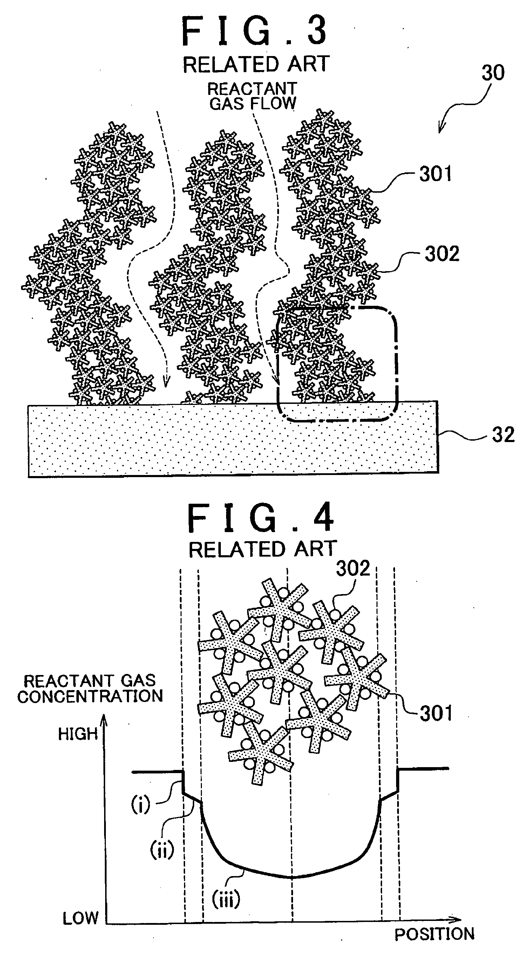

The above effects are explained more fully in conjunction with FIGS. 3 and 4. FIG. 3 is a schematic enlarged diagram of a cathode catalyst layer according to the comparative example. As shown in FIG. 3, at a cathode catalyst layer 30 according to the comparative example, a reactant gas that has been supplied flows in such a manner as to thread its way through the interior of a carbon carrier 301 having a complex pore structure. However, as indicated by the dashed lines in the diagram, the reactant gas flows in complex paths. For this reason, the reactant gas ends up taking time to reach the polymer electrolyte membrane 32 side. Therefore, the concentration of reactant gas is probably low within the pores formed in the carbon carrier 301 at places close to the polymer electrolyte membrane 32. Also, the catalyst particles 302 have an agglomerate structure that is covered by ionomer (not shown). Hence, there is a possibility that the concentration of reactant gas near the catalyst particles 302 decreases.

FIG. 4 is a schematic enlarged diagram of the dashed line-enclosed region in FIG. 3. FIG. 4 also indicates the characteristics of the reactant gas concentration around the carbon carrier 301. As shown in FIG. 4, when one looks at a given carbon carrier 301, the reactant gas concentration various in a characteristic way in regions, or at positions, (i) to (iii) described below.

That is, first of all, the concentration of the reactant gas supplied in a gaseous state undergoes a large change in the vicinity of the agglomerate structure (position (i)). This arises because the reactant gas comes into contact with the surface of the ionomer positioned at the outer shell of the agglomerate structure, and dissolves in the ionomer. The reactant gas that has dissolved in the ionomer diffuses further to the interior from position (i). Such diffusion incurs fixed impediments to transport. Hence, as the reactant gas diffuses to the interior of the agglomerate structure, the reactant gas concentration gradually decreases (region (ii)). As the reactant gas diffuses still further to the interior from region (ii), in addition to the above-mentioned fixed impediments to transport, the concentration of reactant gas gradually decreases on account of consumption by reactions (region (iii)).

At the same time, the product water that arises due to the reactions flows over a pathway that is the reverse of the reactant gas pathway. Specifically, the product water flows in the in following order: interior of agglomerate structure, pore interior, pore exterior. Hence, the product water ends up being retained within the cathode catalyst layer, and sometimes impeding transport of the reactant gas. Even assuming that the carbon carrier 301 had hydrophilic pores, the product water would be trapped in these pores, readily giving rise to the above impediments to transport. Moreover, assuming a case in which the amount of catalyst in the cathode catalyst layer 30 is reduced, because the consumption of reactant gas and the amount of product water per unit of catalyst would increase, there is a strong possibility that the cell performance would markedly decrease, particularly under high-load operation.

Furthermore, in the structure of the cathode catalyst layer 30 according to the comparative example, because the protons which are transported in the ionomer and the electrons which flow through the carbon carrier 301 flow over complex pathways, they must move a long distance before reaching the three-phase interface. Accordingly, there is the additional problem that the resistance at the time of such movement becomes large.

From this standpoint, owing to the structure of the cathode catalyst layer 16 in the present embodiment, gases and product water are able to move smoothly within the pores between adjoining CNTs and the interior spaces of CNTs may be utilized as gas transport paths, enabling the smooth transport of the reactant gas and product water. Also, the distances moved by the electrons and protons up until reaching the three-phase interface can be shortened. As a result, a good power-generating performance which responds to all operating states of the fuel cell 10 can be achieved.

### Method of Manufacturing a Fuel Cell

Next, a method of manufacturing the fuel cell 10 of the present embodiment is described. The fuel cell 10 of this embodiment can be manufactured by means of (1) a CNT growing step, (2) a defect forming step, (3) a catalyst supporting step, (4) an ionomer coating step, and (5) a MEGA forming step.

### (1) CNT Growing Step

This is a step in which CNTs are oriented in a direction that is substantially perpendicular to a substrate. Here, "substantially perpendicular to t a substrate" means that the lengthwise direction of the CNTs is substantially at a right angle to the substrate. However, in cases where a CNT has a shape in the lengthwise direction that is not linear, the angle between the straight line connecting the centers of both end faces of the CNT and the substrate is used to determine the lengthwise direction of the CNT.

In this step, first a substrate on which a seed catalyst has been supported is prepared. The seed catalyst serves as nuclei when the CNTs grow, and are composed of fine metal particles. Examples of seed catalysts that may be used include iron, nickel, cobalt, manganese, molybdenum, palladium, or alloys thereof. The substrate may be, for example, a silicon substrate, glass substrate, quartz substrate or the like. Where necessary, the surface of the substrate is cleaned. Exemplary methods for cleaning the substrate include heat treatment in a vacuum.

The seed catalyst may be supported on the substrate by, for example, coating or electron beam vapor depositing a solution containing the seed catalyst or a complex thereof so as to form a metal thin-film on the substrate, then heating at about 800°C in an inert atmosphere or under reduced pressure to render the metal thin-film into fine particles. It is generally preferable for the seed catalyst to have a particle size of from about 1 nm to about 20 nm. To support seed catalyst having such a particle size, it is preferable to set the thickness of the metal thin-film layer to from about 1 nm to about 10 nm.

Next, CNTs are grown on the substrate. In this CNT growth step, with the substrate placed in a space having a given temperature suitable for CNT growth (typically about 800°C) and an inert atmosphere, a precursor gas is supplied to the seed catalyst on the substrate. In this way, the CNTs grow starting at the seed catalyst, so that CNTs closed at the distal end grow in a substantially perpendicular direction with respect to the substrate. Examples of gases that may be used as the precursor gas supplied in this step include carbon-based gases such as methane, ethylene, acetylene, benzene and alcohol.

The flow rate, feed period and total feed amount of the precursor gas are not subject to any particular limitation, although these may be set as appropriate based on such considerations as the tube length, tube diameter and amorphous layer thickness of the CNTs. For example, the thickness of the amorphous layer and the length of the CNTs that grow can be designed based on the concentration of the precursor gas supplied (precursor gas flow rate/(precursor gas flow rate + inert gas flow rate)). That is, the higher the concentration of the precursor gas supplied, the thicker the amorphous layer can be made and the longer the length to which the CNTs can be grown.

As mentioned above, CNTs oriented substantially perpendicular to the substrate are obtained on the substrate. These CNTs are oriented in a state such that an open end is formed on the substrate and a closed end is formed on the distal side. By suitably altering the various conditions in this step, CNTs in which an amorphous layer is formed on the outer surface of the CNT and a highly crystalline layer is formed on the inside surface can be obtained.

The above-described step uses a chemical vapor deposition (CVD) process to form the CNTs by making both the seed catalyst and the precursor gas present together under high-temperature conditions. However, the process of forming CNTs is not limited to a CVD process. For example, formation may be carried out using a vapor-phase growth process such as an arc discharge process or a laser vapor deposition process, or some other available method of synthesis.

### (2) Defect Forming Step

This is a step in which defects are formed in the CNTs which have been grown on the substrate. It is generally possible to control the crystallinity of the CNTs by means of the various conditions in the above-described Step (1). That is, by growing the CNTs at a low temperature, the crystallinity of the CNTs can be lowered. Alternatively, the crystallinity of the CNTs can be lowered by lowering the purity of the reactant gas. It is also possible to lower the crystallinity by adding a specific amount of sulfur or a sulfur compound such as thiophene to the seed catalyst. By altering in this way the conditions under which the CNTs are grown, defects can be formed. However, when an attempt is -made to grow CNTs at a low temperature, the activity of the seed catalyst decreases, making it more difficult for the growth reactions to arise. Hence, in step (1), first CNT. is grown, then defects are formed.

The defect-forming method is not subject to any particular limitation, provided it is a method which is capable of forming defects that communucate between the outer surface of the CNTs and the hollow space. In one such method, the CNTs which have been grown on the substrate are heated treated, together with the substrate, in the presence of oxygen. Using such a heat treatment method, defects can be forcibly formed by partially oxidizing high-reactivity carbon atoms at the CNT surface. Alternatively, defect formation may be promoted by introducing a metal salt as an oxidation catalyst onto the outer surface of the CNTs, then carrying out heat treatment.

Alternatively, the CNTs which have grown on the substrate may be dipped, together with the substrate, in water or alcohol, then subjected to microwave irradiation. Water and alcohol can easily be vaporized and removed with microwaves. For this reason, defects can readily be formed by depositing water in the form of specks on the outer surface of CNTs, then irradiating the nanotube s to with microwaves having a frequency of 2.45. GHz. The size of the defects formed can be adjusted by suitably varying the various conditions in such methods. In cases where the defects are to formed with microwaves, this may even be carried out after the catalyst supporting step (3) described below.

### (3) Catalyst Supporting Step

In this step, catalyst particles are supported on the CNTs in which defects have been formed. The method of supporting catalyst particles in this step is not subject to any particular limitation, and may be carried out by any suitable wet process or dry process. Wet processes are exemplified by methods in which a metal salt-containing solution is coated onto the surface of cathode nanotubes, followed by heating to at least 200°C in a hydrogen atmosphere so as to effect reduction. The metal salt is exemplified by metal halides, metal acid halides, inorganic acid salts of metals, organic acid salts of metals and metal complex salts, wherein the metal is any of those listed above in connection with the catalyst particles. The solution containing such metal salts may be an aqueous solution or an organic solvent solution. Examples of methods for coating the metal salt solution onto the surface of the CNTs include methods in which the CNTs are dipped in a metal salt solution, methods in which the metal salt solution is added dropwise to the surface of the CNTs, and methods in which the metal salt solution is sprayed onto the surface of the CNTs.

For example, in cases where platinum is used as the catalyst, a platinum salt solution obtained by dissolving a suitable amount of ch1 oroplatinic acid or a platinum nitrate solution (e.g., a nitric acid solution of dinitro diamine platinum) in an alcohol such as ethanol or isopropanol may be used as the wet process. The use of a platinum salt solution obtained by dissolving, in alcohol, nitric acid solution of diamine dinitro platinum is preferred because the platinum can be uniformly supported on the surface of the CNTs. Examples of dry processes include electron beam vapor deposition, sputtering, and electrostatic coating.

### (4) Ionomer Coating-Step

In this step, an ionomer is coated onto the surface of the CNTs on which the catalyst has been supported. This step is carried out by (i) dipping the CNTs in an ionomer solution, then uniformly impregnating the nanotubes with the ionomer solution by vacuum degassing, and subsequently (ii) vacuum drying to remove the solvent. By repeatedly carrying (i) and (ii), it is possible to support the desired amount of ionomer on the CNTs. By supporting the desired amount of ionomer, spaces can be formed between mutually adjoining CNTs.

The method of coating the ionomer onto the CNT surface is not limited to the above method. That is, a solution obtained by dispersing or dissolving the ionomer may be coated onto the CNT surface by, for example, a sprayer, a die coater, a dispenser or screen printing, followed by drying. Alternatively, as mentioned above, the ionomer may be supported on the CNT surface by coating or application in some other way in the state of a polymer. Or, the ionomer may be supported on the CNT surface by applying a polymerization composition which includes a precursor of the ionomer and optional additives such as various types of polymeric initiators to the surface of the CNTs, drying if necessary, then exposure to radiation such as ultraviolet light or heated to effect polymerization.

### (5) MEGA Forming Step

In this step, the CNTs that have been coated with ionomer are transferred (e.g., hot-pressed) to a polymer electrolyte membrane, then are sandwiched between gas diffusion layers. The ionomer-coated CNTs are hot-pressed, together with the substrate, with the distal sides thereof, that is, with the closed ends of the CNTs, facing the polymer electrolyte membrane side. The substrate is then peeled off. In this way, the open ends of the CNTs are formed on the substrate side. A MEGA is formed by additionally disposing the gas diffusion layers so as to be in contact with the open ends of the CNTs. The gas diffusion layers are preferably disposed in such a way that a slight space forms between the open ends of the CNTs and the surfaces of the gas diffusion layers. In this way; the path selectivity of the reactant gas that flows into the gas diffusion layers can be increased while ensuring electrical connection between the CNTs and the gas diffusion layer. A fuel cell 10 according to this embodiment can be manufactured by further sandwiching the MEGA obtained in the above way between the above-described separators.

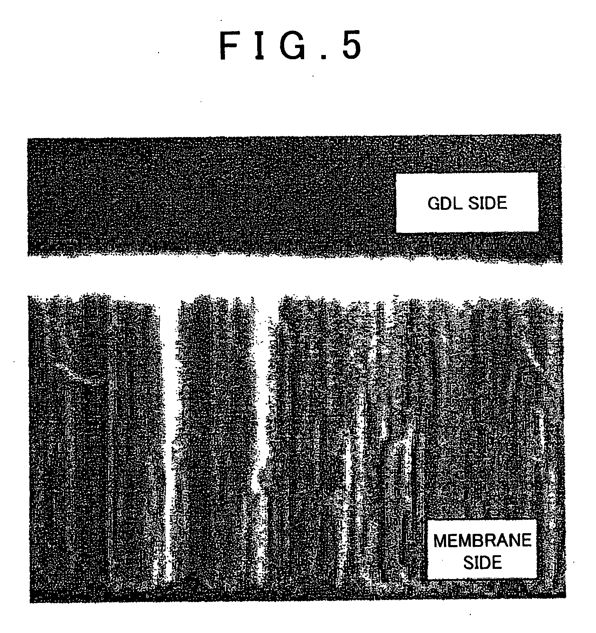

FIG. 5 shows a cross-sectional SEM of the cathode catalyst layer in the fuel cell fabricated by the above-described manufacturing process. As shown in FIG. 5, the CNTs are provided in a perpendicular direction as seen from the gas diffusion layer (GDL layer). Moreover, it is apparent that the open ends of the CNTs have been provided on the GDL layer side, and that the closed ends of the CNTs have been provided on the polymer electrolyte membrane side.

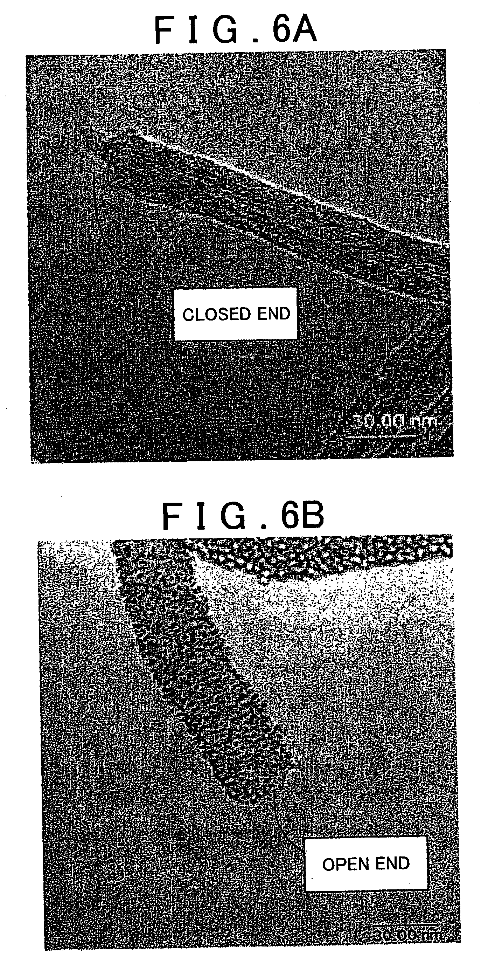

FIGS. 6A and 6B show, respectively, a TEM of a closed end of a CNT prior to transfer (e.g., hot-pressing) and a TEM of an open end of a CNT following transfer. It is apparent from FIG. 6A that a closed end exists at the distal portion of the CNT prior to transfer. Hence, by orienting this closed end on the polymer electrolyte membrane side, moisture inflow from the polymer electrolyte membrane can be prevented while maintaining electrical contact with the polymer electrolyte membrane. Moreover, it is apparent from FIG. 6B that an open end exists at the distal portion of the CNT following transfer. Hence, by orienting the open end on the gas diffusion layer side, the reactant gas can be made to flow into the hollow space of the CNT from the gas diffusion layer.

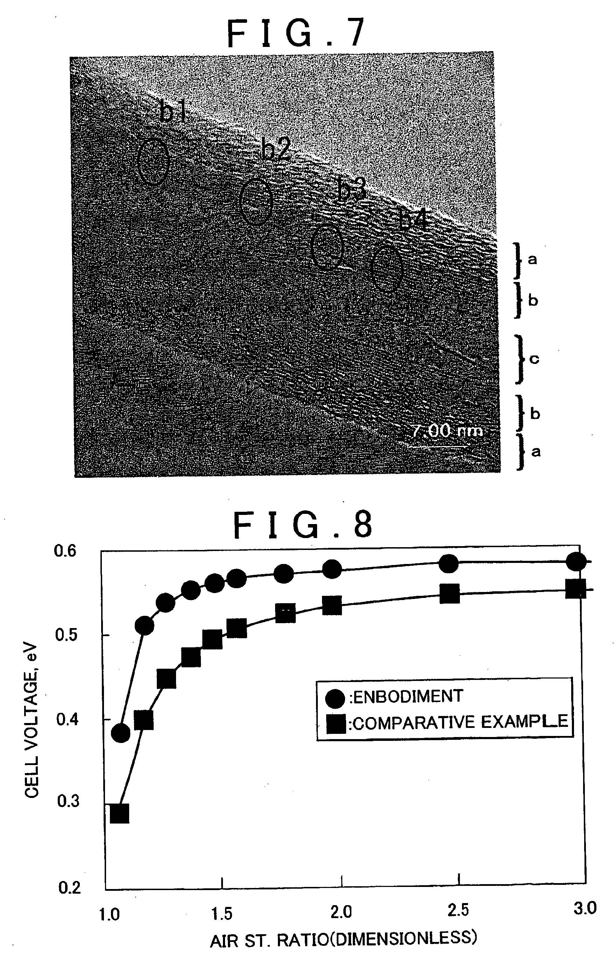

FIG. 7 is a TEM showing the crystal structure and defect structure of a CNT. The striped pattern in the diagram indicates that several sheets of carbon are stacked. At the same time, it also shows the degree of crystallinity. As is apparent from the striped pattern, the crystal structure of the CNT is formed of an outer wall layer a of relatively low crystallinity and an inner wall layer b of relatively high crystallinity. It is apparent from this that, in the CNT, an amorphous layer (hydrophilic layer) of low crystallinity has formed on the outer surface side and a layer of high crystallinity (water-repelling layer) has formed on the inner surface side. In addition, a hollow space c has formed to the interior of the inner wall layer b where a striped pattern does not exist.

As indicated by b1 to b4 in FIG. 7, density gradations exist in the striped pattern. It is apparent from this that defects are present in the inner wall layer b. Some defects even reach to the hollow space c side from the vicinity of the boundary between the outer wall layer a and the inner wall layer b. It is apparent from the above that, in the CNT, a reactant gas pathway which extends from the hollow space c to the outer wall layer a via the inner wall layer b has formed.

### Performance Test

FIG. 8 is a graph showing the results of a performance test. The performance test was carried out by measuring the cell voltage when a test cell manufactured by the above-described manufacturing method was operated under the following conditions.
Cell: 60°C, 1.6 _{A/cm}³
H₂ conditions: st. ratio, 1.2; 140 kPa, unhumidified
Air conditions: st. ratio, 3.0 to 1.1; 140 kPa, unhumidified

Here, "st. ratio" refers to the ratio of the amount of reactant gas that is fed to the minimum amount of reactant gas required for an electrochemical reaction. That is, the amount of reactant gas becomes greater (high concentration) at a larger st. ratio, and the amount of reactant gas becomes lower (low concentration) as the st. ratio approaches 1.0. For the sake of comparison, a performance test was carried out under the same conditions using a test cell obtained in a comparative example.

As shown in FIG. 8, in the present embodiment, even when the st. ratio of the air was set to 1.2, substantially no voltage drop occurred, indicating a stable performance. By contrast, in the comparative example, when the st. ratio of air was lowered, the voltage gradually decreased; at a ratio below 1.5, the voltage dropped sharply. From the above results, it was apparent that the reactant gas diffusivity in the catalyst layer could be increased in this embodiment, and that the amount of reactant gas was able to at least maintain a good cell performance.

In this embodiment, the invention was employed in the cathode catalyst layer 16, but it may also be employed in the anode catalyst layer 14. Because the structure and orientation of the CNTs 161 in this embodiment are able to increase the diffusivity of the reactant gases, it is possible to apply the structure and orientation of the CNTs of this embodiment to an anode catalyst layer 14.

Also, in this embodiment, gas diffusion layers 18 and 22 were provided. However, instead of providing gas diffusion layers 18 and 22, the anode catalyst layer 14 and the cathode catalyst layer 16 may be in direct contact with, respectively, separators 20 and 24. In this case, it is preferable for the fuel cell to be manufactured in such a way that the gas feed pathways which have been formed in the separators 20 and 24 communicate with the open ends 161 a of the CNTs 161.

Moreover in the present embodiment, hydrophilic properties were conferred by forming an amorphous layer on the outer surface of the CNTs 161. However, it is also possible to separately provide a step in which hydrophilic functional groups are introduced, thereby conferring hydrophilic properties to the outer surface. For example, hydrophilicity can be conferred by oxygen plasma treating the CNTs and thereby introducing oxygen-containing groups onto the outer surface. Alternatively, it is also possible to confer hydrophilicity to the outer surface by inducing contact with a strong oxidizing agent such as nitric acid or sulfuric acid for a sufficient period of time to effect oxidation, or by exposing the CNTs to ozone gas.

Furthermore, in this embodiment, the CNTs 161 were oriented so that the angle between the polymer electrolyte membrane 12 and the lengthwise direction of the CNTs 161 was substantially a right angle. However, this angle can be made more oblique. So long as the open ends 161a are in contact with the gas diffusion layer 22 and the closed ends 161b are in contact with the polymer electrolyte membrane 12, efficient circulation of the reactant gas is possible. Therefore, assuming the open ends 161a and the closed ends 161b to have the same orientations as in the present embodiment, the angle at which the CNTs are tilted with respect to the polymer electrolyte membrane may be variously modified.

## Claims

1. A membrane electrode assembly comprising:
a polymer electrolyte membrane (12);
a carbon nanotube (161) which is disposed so as to be in contact with the polymer electrolyte membrane (12), and which, in a lengthwise direction of the carbon nanotube (161), is open at a first end and closed at a second end;
a catalyst disposed on an outer surface of the carbon nanotube; and
a proton conductor disposed at the outer surface of the carbon nanotube so as to be in contact with the catalyst,
wherein a closed end (161b) of the carbon nanotube is disposed on an electrolyte membrane side of the carbon nanotube, and on the outer surface of the carbon nanotube, a plurality of communicating pores which communicate with an interior space of the carbon nanotube are formed.

2. The membrane electrode assembly according to claim 1, wherein the outer surface of the carbon nanotube (161) is subjected to hydrophilizing treatment.

3. The membrane electrode assembly according to claim 1, wherein the outer surface of the carbon nanotube (161) has an amorphous layer structure.

4. The membrane electrode assembly according to any one of claims 1 to 3, wherein the carbon nanotube (161) is formed substantially perpendicular to the polymer electrolyte membrane (12).

5. The membrane electrode assembly according to any one of claims 1 to 4, wherein the carbon nanotube (161) is formed at a cathodic electrode of a fuel cell which includes the membrane electrode assembly.

6. The membrane electrode assembly according to any one of claims 1 to 3, wherein the plurality of communicating pores are formed by heating the carbon nanotube (161) in presence of oxygen.

7. The membrane electrode assembly according to claim 6, wherein the plurality of communicating pores are formed by adding a metal salt to the carbon nanotube (161) and heating.

8. The membrane electrode assembly according to any one of claims 1 to 4, wherein the plurality of communicating pores are formed by subjecting to microwave irradiation the carbon nanotube (161) on which water or alcohol is deposited.

9. A fuel cell comprising:
the membrane electrode assembly according to any one of claims 1 to 8; and
a separator (20) or a gas diffusion layer (18) which is disposed so as to be in contact with the carbon nanotube (161), and on which a gas flow channel that allows a reactant gas to flow is formed,
wherein an open end (161a) of the carbon nanotube is disposed so as to communicate with the gas flow channel.

10. A method of manufacturing a membrane electrode assembly, the method comprising:
growing a carbon nanotube (161) on a substrate;
forming a plurality of communicating pores in a side surface of the carbon nanotube (161);
supporting a catalyst on the carbon nanotube (161);
coating an ionomer on the catalyst-supporting carbon nanotube; and
transferring the ionomer-coated carbon nanotube from the substrate to a polymer electrolyte membrane (12),
wherein a closed end (161b) of the carbon nanotube (161) is disposed on an electrolyte membrane side of the carbon nanotube (161).

## Patentansprüche

1. Membranelektrodenanordnung umfassend:
eine Polymerelektrolytmembran (12);
eine Kohlenstoffnanoröhre (161), die so angeordnet ist, dass sie in Kontakt mit der Polymerelektrolytmembran (12) steht, und die in einer Längsrichtung der Kohlenstoffnanoröhre (161) an einem ersten Ende offen und an einem zweiten Ende geschlossen ist;
einen Katalysator, der auf einer Außenoberfläche der Kohlenstoffnanoröhre angeordnet ist; und
einen Protonenleiter, der an der Außenoberfläche der Kohlenstoffnanoröhre so angeordnet ist, dass er in Kontakt mit dem Katalysator steht,
wobei ein geschlossenes Ende (161 b) der Kohlenstoffnanoröhre auf einer Elektrolytmembranseite der Kohlenstoffnanoröhre angeordnet ist und auf der Außenoberfläche der Kohlenstoffnanoröhre eine Vielzahl kommunizierender Poren, die mit einem Innenraum der Kohlenstoffnanoröhre kommunizieren, ausgebildet ist.

2. Membranelektrodenanordnung nach Anspruch 1, wobei die Außenoberfläche der Kohlenstoffnanoröhre (161) einer Hydrophylisierungsbehandlung unterzogen ist.

3. Membranelektrodenanordnung nach Anspruch 1, wobei die Außenoberfläche der Kohlenstoffnanoröhre (161) eine amorphe Schichtstruktur aufweist.

4. Membranelektrodenanordnung nach einem der Ansprüche 1 bis 3, wobei die Kohlenstoffnanoröhre (161) im Wesentlichen senkrecht zu der Polymerelektrolytmembran (12) ausgebildet ist.

5. Membranelektrodenanordnung nach einem der Ansprüche 1 bis 4, wobei die Kohlenstoffnanoröhre (161) an einer Kathodenelektrode einer Brennstoffzelle, welche die Membranelektrodenanordnung einschließt, ausgebildet ist.

6. Membranelektrodenanordnung nach einem der Ansprüche 1 bis 3, wobei die Vielzahl kommunizierender Poren ausgebildet wird durch Erwärmen der Kohlenstoffnanoröhre (161) in Gegenwart von Sauerstoff.

7. Membranelektrodenanordnung nach Anspruch 6, wobei die Vielzahl kommunizierender Poren ausgebildet wird durch Zugeben eines Metallsalzes zu der Kohlenstoffnanoröhre (161) und Erwärmen.

8. Membranelektrodenanordnung nach einem der Ansprüche 1 bis 4, wobei die Vielzahl kommunizierender Poren ausgebildet wird, indem die Kohlenstoffnanoröhre (161), auf welche Wasser oder Alkohol abgeschieden ist, einer Mikrowellenbestrahlung ausgesetzt wird.

9. Brennstoffzelle umfassend:
die Membranelektrodenanordnung gemäß einem der Ansprüche 1 bis 8; und
einen Separator (20) oder eine Gasdiffusionsschicht (18), die so angeordnet ist, dass sie in Kontakt mit der Kohlenstoffnanoröhre (161) steht, und auf welcher ein Gasströmungskanal, der ein Strömen eines Reaktantengases ermöglicht, ausgebildet ist,
wobei ein offenes Ende (161 a) der Kohlenstoffnanoröhre so angeordnet ist, dass es mit dem Gasströmungskanal in Verbindung steht.

10. Verfahren zur Herstellung einer Membranelektrodenanordnung, wobei das Verfahren umfasst:
Wachsen einer Kohlenstoffnanoröhre (161) auf einem Substrat;
Ausbilden einer Vielzahl kommunizierender Poren in einer Seitenoberfläche der Kohlenstoffnanoröhre (161);
Trägern eines Katalysators auf der Kohlenstoffnanoröhre (161);
Beschichten eines lonomers auf die einen Katalysator tragenden Kohlenstoffnanoröhre; und
Übertragen der lonomer-beschichteten Kohlenstoffnanoröhre von dem Substrat auf eine Polymerelektrolytmembran (12),
wobei ein geschlossenes Ende (161b) der Kohlenstoffnanoröhre (161) auf einer Elektrolytmembranseite der Kohlenstoffnanoröhre (161) angeordnet ist.

## Revendications

1. Ensemble membrane-électrodes comprenant :
une membrane d'électrolyte polymère (12) ;
un nanotube de carbone (161) qui est disposé de manière à être en contact avec la membrane d'électrolyte polymère (12), et qui est, dans une direction longitudinale du nanotube de carbone (161), ouvert au niveau d'une première extrémité et fermé au niveau d'une deuxième extrémité ;
un catalyseur disposé sur une surface externe du nanotube de carbone ; et
un conducteur de protons disposé au niveau de la surface externe du nanotube de carbone de manière à être en contact avec le catalyseur,
où une extrémité fermée (161b) du nanotube de carbone est disposée sur un côté de la membrane d'électrolyte du nanotube de carbone, et sur la surface externe du nanotube de carbone, une pluralité de pores communicants qui communiquent avec un espace intérieur du nanotube de carbone sont formés.

2. Ensemble membrane-électrodes selon la revendication 1, dans lequel la surface externe du nanotube de carbone (161) est soumise à un traitement d'hydrophilisation.

3. Ensemble membrane-électrodes selon la revendication 1, dans lequel la surface externe du nanotube de carbone (161) a une structure de couche amorphe.

4. Ensemble membrane-électrodes selon l'une quelconque des revendications 1 à 3, dans lequel le nanotube de carbone (161) est formé de manière essentiellement perpendiculaire à la membrane d'électrolyte polymère (12).

5. Ensemble membrane-électrodes selon l'une quelconque des revendications 1 à 4, dans lequel le nanotube de carbone (161) est formé au niveau d'une électrode cathodique d'une pile à combustible qui comporte l'ensemble membrane-électrodes.

6. Ensemble membrane-électrodes selon l'une quelconque des revendications 1 à 3, dans lequel la pluralité de pores communicants sont formés par chauffage du nanotube de carbone (161) en présence d'oxygène.

7. Ensemble membrane-électrodes selon la revendication 6, dans lequel la pluralité de pores communicants sont formés par l'ajout d'un sel métallique au nanotube de carbone (161) et par le chauffage.

8. Ensemble membrane-électrodes selon l'une quelconque des revendications 1 à 4, dans lequel la pluralité de pores communicants sont formés en soumettant, à un rayonnement micro-ondes, le nanotube de carbone (161) sur lequel de l'eau ou de l'alcool est déposé(e).

9. Pile à combustible comprenant :
l'ensemble membrane-électrodes selon l'une quelconque des revendications 1 à 8 ; et
un séparateur (20) ou une couche de diffusion de gaz (18) qui est disposé(e) de manière à être en contact avec le nanotube de carbone (161), et sur lequel/laquelle un canal d'écoulement de gaz qui permet l'écoulement d'un gaz réactif est formé,
où une extrémité ouverte (161a) du nanotube de carbone est disposée de manière à communiquer avec le canal d'écoulement de gaz.

10. Procédé de fabrication d'un ensemble membrane-électrodes, le procédé comprenant le fait :
de développer un nanotube de carbone (161) sur un substrat ;
de former une pluralité de pores communicants dans une surface latérale du nanotube de carbone (161) ;
de supporter un catalyseur sur le nanotube de carbone (161) ;
de déposer un ionomère sur le nanotube de carbone supportant le catalyseur ; et
de transférer le nanotube de carbone revêtu d'ionomère du substrat à une membrane d'électrolyte polymère (12),
où une extrémité fermée (161b) du nanotube de carbone (161) est disposée sur un côté de la membrane d'électrolyte du nanotube de carbone (161).
